Europäisches Patentamt

European Patent Office

Office européen des brevets

(19)

(11) EP 1 400 981 A2

(12) EUROPEAN PATENT APPLICATION

(43) Date of publication:
24.03.2004 Bulletin 2004/13

(51) Int Cl.⁷: G21B 1/00

(21) Application number: 03253457.0

(22) Date of filing: 02.06.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 17.06.2002 JP 2002175211

(71) Applicants:
• Ikegami, Hidetsugu
Takarazuka-shi, Hyogo (JP)

• Ikegami, Sayaka
Takarazuka-shi, Hyogo (JP)

(72) Inventor: Ikegami, Hidetsugu
Takarazuka-shi, Hyogo (JP)

(74) Representative: Dealtry, Brian
Eric Potter Clarkson,
Park View House,
58 The Ropewalk
Nottingham NG1 5DD (GB)

(54) **Method of controlling temperature of nonthermal nuclear fusion fuel in nonthermal nuclear fusion reaction**

(57)     A method of controlling a temperature of non-thermal nuclear fusion fuel, wherein materials of low boiling point are added as a coolant to a nonthermal nuclear fusion fuel mixed with liquid lithium (02), or nuclear fusion materials fused into liquid lithium (02), and rapid elevation in temperature of a local nonthermal fusion reaction region is suppressed by a heat vaporization of the materials of low boiling point so as to enhance the nonthermal nuclear fusion reaction. The materials of low boiling point are sodium or potassium.

FIG. 1

EP 1 400 981 A2

## Description

The present invention relates to a method of controlling a temperature of nonthermal nuclear fusion fuel in a nonthermal nuclear fusion reaction generating method, and more particularly, relates to a method of controlling a temperature of nonthermal nuclear fusion fuel in a nonthermal nuclear fusion generating method, wherein a liquid metal lithium is used mainly as a nuclear fuel and a catalytic solvent.

Hitherto, no ion / electron plasma of higher density usable practically for the nuclear fusion reaction has been obtained. Inventions shown in the Japanese Patent Application Laid-Open No.207092/2002 ( Method of generating molten lithium nuclear fusion reaction and apparatus for supplying nuclear fusion energy ), Japanese Patent Application Nos. 177670/2001 ( Method of and apparatus for generating nuclear fusion electric energy ), 216026/2001 ( Method of and apparatus for generating nonthermal nuclear fusion electric energy ), 258233/2001 ( Apparatus for nuclear fusion reaction ), 258234/2001 ( Method of generating molten lithium nuclear fusion reaction and apparatus for generating molten lithium nuclear fusion energy ), and 67220/2002 ( Method of and apparatus for generating recoilless nonthermal nuclear fusion reaction ) have been proposed by the inventor of this patent application. Each of such inventions discloses the fact that the ion / electron plasma of high density can be obtained by the conventional device and that the energy supply device using the ion / electron plasma can be obtained.

Each of said inventions, however, has following problems in the practical use.

In the invention of the Japanese Patent Application No. 67220/2002 ( Method of and apparatus for generating recoilless nonthermal nuclear fusion reaction ), for example, the nuclear reaction rate is enhanced by about $10^{13}$ times by the thermodynamic force in the liquid lithium when deuterium ions of buffer energy is implanted into the liquid lithium. However, the enhancement effect of the reaction is reduced due to rapid elevation in temperature of a local nonthermal nuclear fusion reaction region and the utility thereof may be lost, because the nonthermal nuclear fusion reaction region is limited to the liquid surface of 0 to 1 / 100 micron in depth.

In the invention disclosed in the Japanese Patent Application No. 67220 / 2002, the following nuclear stripping reaction of deuterium ion d of buffer energy not higher than 110 keV is utilized in the course of the energy generation shown in a reaction equation (1). Here, keV is kiloelectron volt.

$$^{7}\text{Li} + \text{d} \rightarrow 2\,^{4}\text{He} + \text{n} + 15.1 \text{ MeV} \qquad (1)$$

Here, n is neutron, and MeV is megaelectron volt.

The reaction energy in the right side of the equation (1) is ejected as a radiation energy and a kinetic energy of the product nuclei.

The equation (1) shows the fact that two helium atoms ($2\,^{4}\text{He}$) in the right side thereof are produced by the nuclear stripping reaction wherein proton is captured and neutron n is ejected according to the interaction of one atom of deuterium $^{2}\text{H}$ and one atom of $^{7}\text{Li}$ which is a kind of isotope of lithium in the left side of the equation (1). In this reaction, nuclear fusion reaction wherein proton is captured is generated in the stationary state without recoiling of $^{7}\text{Li}$ when middle speed neutrons n of which energy is about twice of deuterium is ejected. Accordingly, the nuclear reaction is enhanced by the thermodynamic force without reducing according to the recoil.

The generated middle speed neutrons are absorbed by $^{6}\text{Li}$ and $^{7}\text{Li}$ in reactions shown in following reaction equations (2) and (3) and $\gamma$ ray energy is emitted. A produced $^{8}\text{Li}$ nucleus is transmuted to beryllium $^{8}\text{Be*}$ of excitation energy of 3.04 MeV at $\beta^{-}$ decay of which half life is 0.84 second as shown in a reaction equation (4), and is $\alpha$ decayed instantaneously, so that $\alpha$ ray energy and $\beta$ ray energy are emitted. However, antineutrino $\bar{\nu}$ emission energy in the reaction equation (4) cannot be taken out as a usable energy.

$$^{6}\text{Li} + \text{n} \rightarrow \,^{7}\text{Li} + \gamma + 7.25 \text{ MeV} \qquad (2)$$

$$^{7}\text{Li} + \text{n} \rightarrow \,^{8}\text{Li} + \gamma + 2.03 \text{ MeV} \qquad (3)$$

$$^{8}\text{Li} \rightarrow \,^{8}\text{Be*} + \beta^{-} + \bar{\nu} + 12.87 \text{ MeV} \qquad (4)$$

$$^{8}\text{Be*} \rightarrow 2\,^{4}\text{He} + 3.13 \text{ MeV} \qquad (5)$$

An energy of about 27 MeV can be taken out by two atoms of $^{7}\text{Li}$ and one atom of $^{2}\text{H}$, even if the energy of antineutrino $\bar{\nu}$ is subtracted in the reactions shown in the reaction equations (1), (3), (4) and (5).

It is possible to control easily the generation of the energy, because the reaction is finished immediately by the stop of the irradiation of the deuterium ion, and to provide an energy source which is easy to handle and not limited in the utility, because no energy is ejected when it is not used.

According to this invention, deuterium ion pulses are irradiated onto a surface of liquid formed of nuclear fusion fuel mixed with liquid lithium or nuclear fusion materials fused into the liquid lithium, so as to induce nonthermal nuclear fusion reaction. In this reaction, an energy is generated according to the reaction equations (1) ~(5) and utilized.

In the reaction equation (1), the nuclear fusion reaction rate is reduced to a level lower than a level of practically use when the temperature of a local liquid lithium surface region is elevated to about 400°C. However, it is noted experimentally that elevation in temperature of a local liquid lithium surface region due to the irradiation of the deuterium ions is moderated, so that the reaction factor is prevented from being reduced, if sodium or potassium of several percents ( percent of atom number ) is mixed with the liquid lithium.

The present invention is based on the above experimental results.

An object of the present invention is to provide a method of preventing rapid elevation in temperature of a local liquid lithium surface region.

Another object of the present invention is to provide a method of controlling a temperature of nonthermal nuclear fusion fuel characterized in that materials of low boiling point are added as a coolant to a nonthermal nuclear fusion fuel mixed with liquid lithium, and rapid elevation in temperature of a local nonthermal fusion reaction region is suppressed by a heat vaporization of the materials of low boiling point so as to enhance the nonthermal nuclear fusion reaction.

Further object of the present invention is to provide a method of controlling a temperature of nonthermal nuclear fusion fuel characterized in that materials of low boiling point are added as a coolant to a nonthermal nuclear fusion fuel mixed with nuclear fusion materials fused into liquid lithium, and rapid elevation in temperature of a local nonthermal fusion reaction region is suppressed by a heat vaporization of the materials of low boiling point so as to enhance the nonthermal nuclear fusion reaction.

Yet further object of the present invention is to provide a method of controlling the temperature of nonthermal nuclear fusion fuel, wherein the materials of low boiling point are sodium or potassium.

These and other aspects and objects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the spirit thereof, and the invention includes all such modifications.

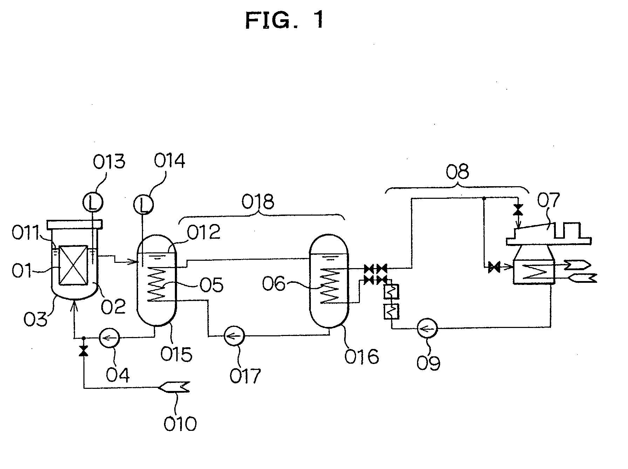

FIG. 1 is a schematic view of a heat utilization system of a first embodiment according to the present invention applied to a recoilless nonthermal nuclear fusion energy generating apparatus.

A method of controlling a temperature of nonthermal nuclear fusion fuel in a nonthermal nuclear fusion reaction generating method according to the present invention can be applied to any of nonthermal nuclear fusion reactions using mainly liquid lithium. However, the present invention will now be explained with reference to a case applied to the method of and apparatus for generating recoilless nonthermal nuclear fusion shown in the Japanese Patent Application No. 67220 / 2002, of which effects have been proven actually.

FIG. 1 is a schematic view of a heat utilization system of a first embodiment according to the present invention applied to a recoilless nonthermal nuclear fusion energy generating apparatus.

The heat utilization system in the present invention comprises a liquid lithium system 02, a water / vapor system 08, and an intermediate cooling system 018, so as to drive a turbine 07 by heat due to the nuclear fusion. A heat exchanger of shell and tube system, for example, is used as a heat exchanging pipe 05 of an intermediate heat exchanger 015 inserted between the liquid lithium system 02 and the water / vapor system 08.

The intermediate cooling system 018 uses a liquid metal or electrically conductive molten salt as a fluid, and receives heat from the liquid lithium system 02 through the intermediate heat exchanger 015. The heat is transmitted to the water / vapor system 08 through a vapor generating device 016.

In the heat utilization system shown in FIG. 1, a liquid lithium supply device 010 containing liquid lithium mixed with materials of low boiling point such as sodium or potassium as a coolant is used in order to control the heat radiation from the liquid lithium surface and the temperature of the liquid lithium surface. Further, devices 013 and 014 for separating and collecting deuterium, lithium and helium are provided.

In FIG. 1, reference numeral 01 denotes a reactor core, 03 denotes a reaction container, 04, 09 and 017 each denote a circulating pump, 06 denotes a heat exchanging pipe, and 011 and 012 denote liquid levels.

As stated above, according to the present invention, rapid elevation in temperature of the local liquid lithium surface region is suppressed by the heat of vaporization of the materials of low boiling point, so that the nuclear fusion reaction enhancement effect due to the thermodynamic force in the liquid lithium can be obtained fully, because the materials of low boiling point such as sodium or potassium are added as a coolant to the nonthemal nuclear fusion fuel containing mainly liquid lithium. Further, the liquid lithium can be prevented from being scattered and the energy can be supplied stably and safely, and accordingly a method of generating nonthermal nuclear fusion which may be handled easily can be obtained.

While this invention has been described with specific embodiments thereof, it is evident that many alternatives, modifications, and variations will be apparent to those skilled in the art. Accordingly, the preferred embodiments of the invention as set forth herein are intended to be illustrative, not limiting. Various changes may be made without departing from the spirit and scope of the invention.

## Claims

1.  A method of controlling a temperature of nonthermal nuclear fusion fuel **characterized in that** materials of low boiling point are added as a coolant to a nonthermal nuclear fusion fuel mixed with liquid lithium (02), and rapid elevation in temperature of a local nonthermal fusion reaction region is suppressed by a heat vaporization of the materials of low boiling point so as to enhance the nonthermal nuclear fusion reaction.

2.  A method of controlling a temperature of nonthermal nuclear fusion fuel **characterized in that** materials of low boiling point are added as a coolant to a nonthermal nuclear fusion fuel mixed with nuclear fusion materials fused into liquid lithium (02), and rapid elevation in temperature of a local nonthermal fusion reaction region is suppressed by a heat vaporization of the materials of low boiling point so as to enhance the nonthermal nuclear fusion reaction.

3.  The method of controlling the temperature of nonthermal nuclear fusion fuel as claimed in claim 1 or 2, wherein the materials of low boiling point are sodium.

4.  The method of controlling the temperature of nonthermal nuclear fusion fuel as claimed in claim 1 or 2, wherein the materials of low boiling point are potassium.

EP 1 400 981 A2

FIG. 1